# EUROPÄISCHE PATENTSCHRIFT

(11) **EP 1 320 474 B1**
(45) Veröffentlichungstag und Bekanntmachung des Hinweises auf die Patenterteilung: **21.12.2005**
(21) Anmeldenummer: 00982941.7
(22) Anmeldetag: 29.09.2000
(51) Int. Cl.: B60R 21/01

(54) **ANORDNUNG ZUM ANSTEUERN EINES INSASSENSCHUTZSYSTEMS UND VERFAHREN ZUM TESTEN EINES INSASSENSCHUTZSYSTEMS**
ARRANGEMENT FOR CONTROL OF A PASSENGER PROTECTION SYSTEM AND METHOD FOR TESTING A PASSENGER PROTECTION SYSTEM
AGENCEMENT POUR COMMANDER UN SYSTEME DE PROTECTION DES OCCUPANTS D'UN VEHICULE ET PROCEDE POUR TESTER UN SYSTEME DE PROTECTION DES OCCUPANTS D'UN VEHICULE

(43) Veröffentlichungstag der Anmeldung: 25.06.2003
(73) Patentinhaber: SIEMENS AKTIENGESELLSCHAFT, 80333 München (DE)
(72) Erfinder: BELAU, Horst, 84085 Langquaid (DE)
(86) Internationale Anmeldenummer: PCT/DE2000/003436
(87) Internationale Veröffentlichungsnummer: WO 2002/026529

(56) Entgegenhaltungen:
- EP-A- 0 872 940
- DE-A- 19 748 311
- DE-A- 19 828 432
- DE-U- 9 001 803

## Beschreibung

Die Erfindung betrifft eine Anordnung zum Ansteuern eines Insassenschutzsystems gemäß dem Oberbegriff von Anspruch 1 und ein Verfahren zum Testen eines Insassenschutzsystems.

Eine derartige Anordnung ist aus der DE 9001803 U bekannt.

Bei herkömmlichen Anordnungen zum Ansteuern eines Insassenschutzsystems weist der Zündpfad des Insassenschutzsystems einen oder zwei Zündschalter auf, die die Energie eines Energiespeichers zu einem Zündelement durchschalten können. Dabei ist in bisherigen Insassenschutzsystemen in dem Zündpfad zusätzlich ein mechanischer Sicherheitsschalter in Serie geschaltet. Der Zündpfad weist Zündschalter, ein oder mehrer Zündelemente und einen Energiespeicher auf. Bei Erkennung eines Aufpralls werden die Zündschalter durchgeschaltet. Um ein unbeabsichtigtes Zünden des Zündelements und damit des Airbags zu vermeiden, wird das Zündelement und der ihm nachgeschaltete Airbag bzw. Gurtstraffer nur dann aktiviert, wenn der mechanische Schalter geschlossen ist. Der mechanische Schalter besteht in der Regel aus einem Beschleunigungsschalter, der beispielsweise bei einem Frontaufprall für die Zeit des Auslösens geschlossen ist.

In modernen Insassenschutzsystemen sind mehrere Rückhalteeinheiten enthalten. In jedem dieser Rückhaltesysteme ist in der Regel ein Sicherheitsschalter pro Zündpfad enthalten.

Der mechanische Schalter ist nicht oder nur schwer testbar und relativ teuer. Daher ist man dazu übergegangen, statt dem mechanischen Schalter einen elektronisch aktivierbaren Sicherheitsschalter in den Zündpfad einzubauen. Dieser Sicherheitsschalter ist allerdings, wie der mechanische Schalter, in der Regel nicht testbar.

Aufgabe der Erfindung ist es daher, eine Anordnung zum Ansteuern eines Insassenschutzsystems zur Verfügung zu stellen, bei dem der Sicherheitsschalter testbar ist. Weiterhin sollen mehrere Sicherheitsschalter unabhängig voneinander testbar sein.

Es ist Aufgabe der Erfindung, eine Anordnung zum Ansteuern eines Insassenrückhaltesystems vorzusehen, bei dem die Sicherheitsschalter testbar sind.

Die Aufgabe der Erfindung wird gelöst durch die Merkmale der unabhängigen Patentansprüche.

Eine Anordnung mit mehreren Zündpfaden weist jeweils mindestens einen Zündschalter, ein Zündelement und einen Sicherheitsschalter auf, wobei der Sicherheitsschalter mindestens eines Zündpfades unabhängig vom Sicherheitsschalter eines weiteren Zündpfades ansteuerbar ist.

Dabei werden die Sicherheitsschalter von mindestens zwei Zündpfaden gemeinsam über eine Steuerschaltung angesteuert.

Die Steuerschaltung kann dabei die Sicherheitsschalter so steuern, dass sich in dem betreffenden Zündpfad sich vorzugsweise drei Betriebszustände einstellen. Die Steuerschaltung ist als Stromspiegelanordnung aufgebaut, die einen Quellentransistor und einen Spiegeltransistor aufweist.

Der Quellenstrom im Quellentransistor ist über einen Schalter einschaltbar, wobei der Quellenstrom über Ports eines Mikrocontrollers auf verschiedene Stromwerte einstellbar ist.

Durch den Spiegeltransistor fließt ein Spiegelstrom, der über einen Widerstand das Potential am Steuereingang eines Sicherheitstransistors einstellt.

Im Betriebszustand "Testen" kann der Spiegelstrom so eingestellt werden, dass der Strom im Zündpfad nicht ausreicht, um das Zündelement zu zünden.

Im Betriebszustand "Auslösen des Zündelements" ist der Spiegelstrom so einstellbar, dass der Strom im Zündpfad ausreicht, um das Zündelement zu zünden.

Weitere Ausführungsformen und Weiterbildungen der Erfindung sind in den abhängigen Ansprüchen angegeben.

Die Erfindung wird anhand der Zeichnung erläutert.

Es zeigen:
- Figur 1: einen Teil eines Zündpfades mit einem Zündelement;
- Figur 2: eine Anordnung zum Ansteuern eines Zündpfades.

Der Sicherheitsschalter dient zum Sicherstellen der "Safing-Funktion" des Insassenschutzsystems. Durch die Safing-Funktion wird ein unbeabsichtigtes Auslösen des Insassenschutzsystems verhindert.

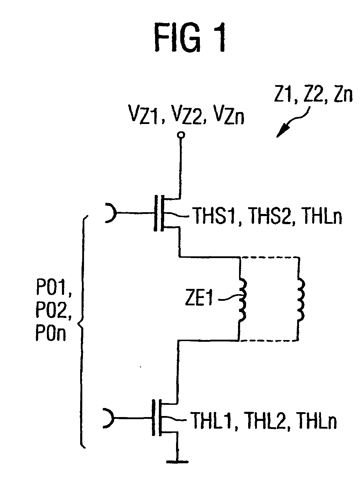

Die Zündeinheit Z1, Z2, .. Zn in Figur 1 weist zwei Zündschalter THLi, THSi auf, deren Durchschaltzweige über ein oder mehrere Zündelemente miteinander verbunden sind. Die Zündschalter sind vorzugsweise als Zündtransistoren, beispielsweise als MOS-Transistoren ausgebildet.

Der Aufbau der Zündeinheiten Z1, Z2, .. Zn wird beispielhaft anhand der Zündeinheit Z1 beschrieben. Die Zündschalter THS1 und THL1 bringen beim Durchschalten nur dann das Zündelement ZE1 zur Explosion, wenn beide gleichzeitig für einen vorgehbaren Zeitraum angesteuert werden. Das Zündelement ZE1 ist vorzugsweise als Zündpille eines Airbag- oder Gurtrückhaltesystems ausgebildet.

Die Zündeinheit Z1 wird über Zündeingänge P01 eines Steuergeräts (nicht dargestellt) angesteuert. Dabei werden die Gates der Zündtransistoren THS1 und THL1 unabhängig voneinander angeordnet, d.h. der P01 weist zwei Leitungen auf.

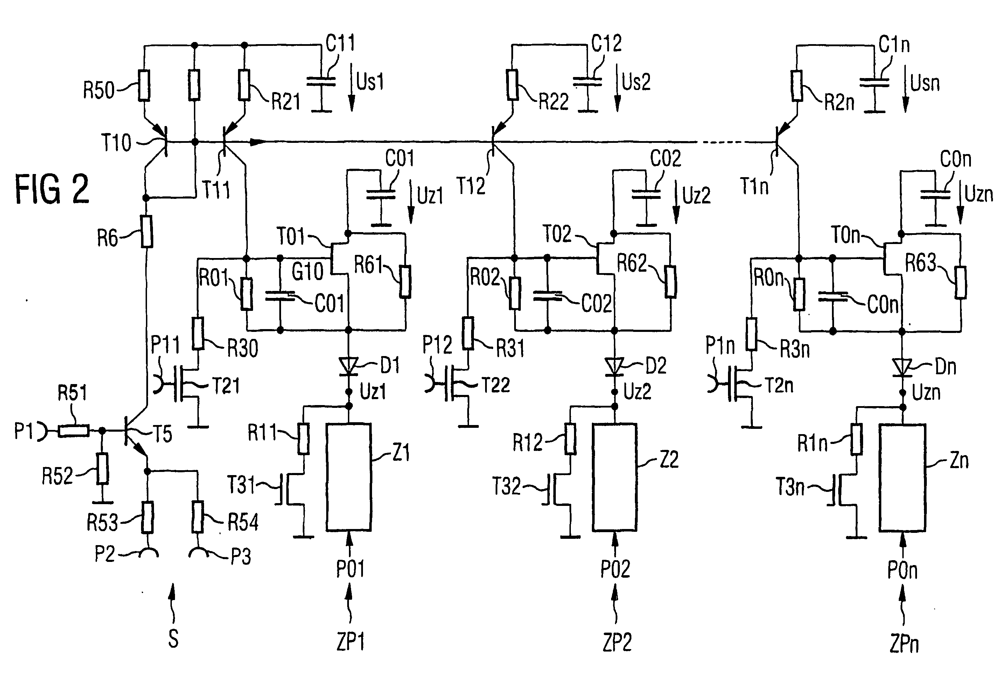

Figur 2 stellt eine Anordnung dar, in der Zündpfade ZP1, ZP2, .., ZPn Z über Steuersignale eines zentralen Rückhaltesystem-Steuergeräts angesteuert werden.

Es sind drei Zündpfade ZP1, ZP2, ZPn dargestellt, die im Wesentlichen gleich aufgebaut sind und die von einer gemeinsamen Steuerschaltung S ansteuerbar sind. Anhand des Zündpfades ZP1 ist der Aufbau und die Funktion eines der Zündpfade ZP1 bis ZPn beispielhaft erläutert.

Der Zündpfad ZP1 beinhaltet die in Figur 1 beschriebene Zündeinheit Z1 mit zwei Zündtransistoren THL1, THS1, zwischen deren Durchschaltpfade ein Zündelement ZE1 angeordnet ist. Ein als Kondensator ausgebildeter Energiespeicher C01 ist über den Durchschaltpfad eines elektronischen Sicherheitsschalters T01, einer Diode D1 mit dem Durchschaltzweig der Zündschalter THS1, THL1 und dem Zündelement ZE als Teil des Zündelements Z1 aus Figur 1 in Serie geschaltet. Parallel zum Durchschaltpfad des Sicherheitsschalters T01 ist ein Widerstand R61 geschaltet. Bei gleichzeitigem Durchschalten des Sicherheitstransistors T01 und der beiden Zündtransistoren THS1, THL1 wird die im Energiespeicher C01 gespeicherte Energie über den im Zündpfad ZP1 fließenden Strom zumindest teilweise auf das Zündelement ZE1 übertragen. Bei vollständigem Durchschalten des Sicherheitsschalters T01 und der Zündschalter THL1, THS1 fließt dabei im Zündpfad ein so hoher Strom, dass das Zündelement ZE1 ausgelöst wird und explodiert, was zum Auslösen des Rückhaltesystems, beispielsweise eines Airbags, führt.

Der Sicherheitsschalter T01 ist vorzugsweise als N-Kanal MOS-FET Transistor ausgebildet. Zur Ansteuerung des Sicherheitstransistors T01 wird zum Durchschalten oder Ansteuern ein Potential benötigt, das höher ist, als das am Energiespeicher C01 anliegende Potential UZ1, da die Source des Sicherheitstransistors T01 mit dem Energiespeicher C01 verbunden ist. Aus Kostengründen wird ein N-Kanal gegenüber einem P-Kanal MOS-FET Transistor bevorzugt.

Die Diode D1 ist im Zündpfad in Durchlassrichtung für den vom Energiespeicher C01 gelieferten Strom geschaltet und dient zum Unterbinden von entgegengesetzt zum Zündstrom fließenden Bypassströmen, die im ungünstigen Fall durch die im Sicherheitstransistor T01 und in den Zündtransistoren THS1 und THL1 integrierte Beipassdiode fließen könnten und das Zündelement ZE1 auslösen könnten. Am Knotenpunkt VZ1 zwischen der Kathode der Diode D1 und dem Durchschaltzweig des Zündschalters THS1 ist parallel zur Zündeinheit Z1 ein Zweig angeordnet, der den Knotenpunkt VZ1 über einen Widerstand R11 und dem Durchschaltpfad eines elektronischen Testschalter T31, vorzugsweise eines Transistors, mit der Masse verbindet.

Weiterhin ist zwischen dem Knotenpunkt VZ1 und dem Gate G10 des Sicherheitstransistors T01 eine Parallelschaltung eines Widerstands R01 und eines Kondensators C01 vorgesehen. Das Gate G10 des Sicherheitstransistors T01 ist über einen Widerstand R30 mit dem Durchschaltzweig eines elektronischen Schalters T21 mit der Masse verbunden. Der elektronische Schalter T21 wird im Folgenden als Deaktivierschalter T21 bezeichnet.

Weiterhin ist das Gate G10 des Sicherheitstransistors T01 über den gesteuerten Pfad eines Spiegeltransistors T11, einen Widerstand R21 mit einem Kondensator C11 verbunden, der auf die Spannung US1 gegenüber der Masse aufgeladen ist. Die Basis des Spiegeltransistors T11 ist mit der Basis eines Quellentransistors T10 und über einen Widerstand mit dem Kondensator C11 verbunden. Der Kondensator C11 ist weiterhin über einen Widerstand R50, den Durchschaltpfad - d.h. die Emmiter-Kollektor-Strecke des Quellentransistors T10 -, einen Widerstand R6, den Durchsteuerzweig (Kollektor-Emitter) eines NPN-Transistors und einem Widerstand R53 mit einem Port P2 eines Steuergeräts (nicht dargestellt) verbunden.

Am Verbindungspunkt zwischen dem Emitter des Transistors T5 und dem Widerstand R53 ist ein Widerstand R54 angeordnet, der mit einem Port P3 verbunden ist. Die Basis des Transistors T5 ist zwischen einem Spannungsteiler R51, R52 angeordnet, der über den Widerstand R51 mit einem Port P1 und dem Widerstand R52 mit der Masse verbunden ist. Der Widerstand R54 ist vorzugsweise größer als der Widerstand R43.

Die Transistoren T10, T11 sind Hauptelemente einer Stromspiegelschaltung. Durch die Durchsteuerpfade der Transistoren T10 und T11 fließt ein Quellenstrom bzw. ein Spiegelstrom. Die Spiegelschaltung wird über einen gemeinsamen Kondensator C11 versorgt, kann aber in einer weiteren Ausführungsform auch durch voneinander unabhängige Kondensatoren versorgt werden.

Die Basen der Spiegeltransistoren T12, ..., T1n der weiteren Zündpfade ZP2, ...,ZPn sind mit der Basis des Quellentransistors T10 verbunden.

Die weiteren Zündpfade ZP2, ..., ZPn sind vorzugsweise wie der Zündpfad ZP1 aufgebaut, können aber auch abweichen von dessen Aufbau. Beispielsweise können in weiteren Ausführungsformen in einem Zündpfad ZP2 der Transistor T32 und/oder der Transistor T22 weggelassen werden.

Der Sicherheitsschalter T01, der in Serie mit den Zündschaltern THS1 und THL1 liegt, soll sicherstellen, dass das Zündelement ZE1 nur dann ausgelöst wird, wenn neben den beiden Zündschaltern THS1, THL1 auch der Sicherheitsschalter T01 durchgeschaltet ist. Vorzugsweise wird der Sicherheitstransistor T01 nur dann durchgeschaltet, wenn ein Beschleunigungsschalter oder ein Beschleunigungssensor zumindest zeitweise Signale liefert, die auf einen Crash hinweisen. Diese Signale werden von einer Auswerteeinheit ausgewertet und an den Port P1 an der Basis des Transistors T5 sowie an den Port am Emitter des Transistors T5 weiter gegeben.

In einer Ausführungsform liegt bei durchgeschaltetem Transistor T5 am Emitter eine Spannung von 4,3 V an, so dass sich ein Spiegelstrom von etwa 300 µA einstellt.

Im Folgenden wird die Funktionsweise der Anordnung nach Figur 1 und Figur 2 erläutert:

Wiederum wird anhand des Zündpfades ZP1 auch die Funktionsweise der übrigen Zündpfade ZP2, ..., ZPn aufgrund deren ähnlichen bzw. identischen Aufbau und Funktion erläutert.

Der Deaktivierschalter T21 dient dazu, bei seinem Durchschalten das Gate G10 des Sicherheitsschalters T01 definiert über den Widerstand R3 auf Masse zu legen, wodurch der Sicherheitsschalter T01 und somit der Zündpfad ZP1 sicher gesperrt wird.

Durch die in den Zündpfaden ZP1, ZP2, ..., ZPn vorhandenen Deaktivierschalter T21, T22, ..., T2n sind die Sicherheitsschalter T01 bis T0n unabhängig voneinander über die mit dem Steuergerät verbundenen Deaktiviereingänge P11 bis P1n deaktivierbar.

Der Testschalter T31 dient dazu, von dem Knoten VZ1 einen ein- und ausschaltbaren Strompfad über den Meßwiderstand R11 zur Masse sicher zu stellen, auch wenn der Zündpfad ZP1 nicht durchgeschaltet ist.

Über den Meßwiderstand R11 fließt bei durchgeschaltetem Testschalter T31 und gesperrten Sicherheitsschalter T01 ein Meßstrom, der durch Messen des Potentials am Punkt VZ1 messbar ist. Durch Ermitteln der Abweichung des Potentials am Punkt VZ1 von Sollwerten sind der Funktionszustand, z.B. Fehler, des Sicherheitsschalters T01, des Zündpfads ZP1, des Testschalters T31 ermittelbar.

Bei durchgeschaltetem Transistor T5 und bei LOW-Schalten eines der beiden Ports P2,P3 fließt durch den Widerstand R6 und den Durchschaltpfad des Quelltransistors T10 ein Quellenstrom, der abhängt von dem Zuständen der Ports P2 und P3. Der Quellenstrom wird über den Spiegeltransistor T11 in den mit dem Gate G10 des Sicherheitsschalters T01 verbundenen Stromzweig gespiegelt. Dabei stellt sich abhängig von den Schaltzuständen der Transistoren T21, T31, THS1 und THL1 am Gate ein Potential ein, das zum Sperren, zum teilweisen Durchschalten oder zum vollständigen Durchschalten des Sicherheitsschalters T01 führt.

Der durch den Spiegeltransistor T11 fließende Spiegelstrom fließt durch den Widerstand R01, wodurch am Gate G10 ein Potential einstellbar ist, dass um so viel höher ist als das Potential im Energiespeicher C01, dass der Sicherheitstransistor T01 voll oder teilweise in Abhängigkeit des Spiegelstroms durchschaltet. Dies ist möglich durch die im Vergleich zur Spannung UZ1 an der Energiequelle C01 höhere Spannung US1 am Kondensator C11.

In der Anordnung gemäß Figur 2 sind nun verschiedene Betriebszustände einstellbar.

Im TEST-Betrieb des Insassenschutzsystems werden die Schaltungselemente der Anordnung getestet.

Im AKTIV-Betrieb des Insassenschutzsystems werden Rückhaltemittel des Insassenschutzsystems bestimmungsgemäß bei Erfassen einer Crash-Situation ausgelöst.

Im AKTIV-Betrieb wird der Port P2 auf Masse gelegt und P3 hochohmig geschaltet. Bei Erkennen eines Crashs mit Hilfe der im Insassenschutzsystem vorhandenen Sensoren und Auswerteeinheiten und -algorithmen werden die beiden Zündschalter THS1, THL1 durchgeschaltet. Der Transistor T5 schaltet durch, nachdem ein mechanischem Schalter durch den Aufprall für eine Mindestschließzeit schließt, wodurch der Port P1 für eine Mindestdauer HIGH geschaltet wird. Der nun im Quelltransistor T10 fließende Quellstrom hängt vom Widerstand R53 ab. Durch entsteht ein Spiegelstrom im Spiegeltransistor T11, der durch den Widerstand R01 und die durchgeschalteten Zündschalter THS1 und THL1 fließt. Der Spiegelstrom reicht aus, um bei durchgeschalteten Zündschaltern THS1, THL1 an dem Gate G10 des Sicherheitsschalters T01 eine Spannung einzustellen, die wiederum ausreicht, um den Sicherheitstransistor voll T01 durchzuschalten. Somit fließt durch den Zündpfad ZP1 und somit das Zündelement ZE1 ein Zündstrom, der zum Explodieren des Zündelements ZE1 führt.

Der Transistor T5 schaltet dann durch, wenn ein Sensorsignal eines mechanischen Schalters auf einen Crash schließen läßt. Das Signal des mechanischen Schalters wird dabei ab einer vorgegebenen Mindestschließzeit elektronisch verlängert, vorzugsweise auf etwa 100 ms, wodurch die dem mechanischem Schalter nachgeordnete Auswerteinheit Steuersignale P1 an die Basis des Transistors T5 liefern kann.

Durch die in den Zündpfaden ZP1 bis ZPn enthaltenen Deaktivierschalter P11 bis P1n sind einzelne Zündpfade - trotz zentralem Auslösesignal über die Steuerschaltung S - über den Port P1 durch die Deaktiviereingänge P11 bis P1n einzeln deaktivierbar. Dies ist sowohl im TEST-Betrieb als auch im AKTIV-Betrieb des Insassenschutzsystems möglich.

Im TEST-Betrieb werden die einzelnen Bestandteile der Anordnung der Figur 2 getestet, ohne ein Zündelement ZE1 auszulösen. Dabei werden vor allem die Spiegelschaltung und die einzelnen Sicherheitsschalter T01 bis T0n getestet.

Im TEST-Betrieb wird die Basis des Transistor T5 auf HIGH gelegt, um das Durchschalten eines mechanischen Schalters zu simulieren. Der Port P3 wird auf Masse (LOW) gelegt und P2 wird hochohmig. Dadurch fließt nun ein Teststrom durch den Widerstand R6 und R54, der über die Transistoren T10, T11 gespiegelt durch den Widerstand R01 fließt. Der durch den Quelltransistor T10 fließende Quellstrom hängt vom Widerstand R54 ab, der größer ist als der Widerstand R53. Es stellt sich am Gate G10 ein Potential ein, das zum teilweisen Durchschalten des Sicherheitsschalters T01 führt.

Weiterhin wird der Schalter T31 durchgeschaltet, damit auch bei abgeschalteten Zündschaltern THS1, THL1 der Spiegelstrom und der Strom durch den Durchschaltzweig des zu testenden Sicherheitsschalters T01 fließen kann. Dadurch fließt ein Strom vom Zündkondensator C01 durch den Durchschaltzweig des Sicherheitsschalters T01 über den Widerstand R11 und den Schalter T31 zur Masse ab. So ist sichergestellt ist, dass der Quellenstrom und damit der Spiegelstrom einen Stromwert annehmen, der höchstens zu einem teilweisen Durchschalten des Sicherheitsschalters T01 führt und nicht zu dessen vollständigen Durchschalten. So ist auch bei fehlerhaftdurchgeschalteten Zündschaltern THS1, THL1 der Strom durch den Zündpfad so gering, dass das Zündelement ZE1 sicher nicht auslöst.

Vorzugsweise werden die Zündpfade ZP1 bis ZPn nacheinander getestet, was durch die unabhängig voneinander abschaltbaren Sicherheitsschalter mit Hilfe der Deaktivierschalter T21, T22,..,T2n realisiert ist. Es werden somit zum Testen des Zündpfades ZP1 der Deaktivierschalter T21 gesperrt und der Testschalter T31 leitend.

Es werden vorzugsweise alle sinnvollen Schaltkombinationen der Schalter T5, T21, T01, T31 in einem Zündpfad ZP1 durchgetestet, um eine genaue Aussage über die Funktionsbereitschaft des Systems zu erhalten.

Bei einer der Kombinationen ist der Sicherheitsschalter T01 nicht durchgeschaltet und der Testschalter T31 durchgeschaltet. Dadurch fließt vom Zündkondensator C01 ein Storm über den Widerstand R61, die Diode D1 und den Widerstand R11 und den Transistor T31.

Bei jeder Schalterkombination wird am Knotenpunkt VZ1 die Spannung gemessen und ausgewertet. Liegt die Spannung am Knotenpunkt VZ1 innerhalb eines vorgegebenen Spannungsfensters, so wird auf eine korrekte Funktion des Schalters T5, der Spiegelanordnung T10, T11, des Sicherheitsschalters T01 und des Deaktivierschalters T21 geschlossen. Liegt der Spannungswert an dem Knotenpunkt VZ1 außerhalb des vorgegebenen Spannungsfensters, so wird auf einen Defekt eines der o.g. Bauteile geschlossen und der betreffende Zündpfad und/oder alle Zündpfade gesperrt. Abhängig von der Schalterkombination und der Abweichung des Spannungswertes am Punkt VZ1 vom zur Schalterkombination zugeordneten Sollwert wird auf die Fehlerart geschlossen. Dabei kann an den Fahrer eine Meldung ausgegeben werden, dass das Airbag-System einen Fehler aufweist und der Fahrer eine Werkstatt aufsuchen soll. In der Werkstatt ist ein einfaches Reparieren des Sytems durch die Erfassung der Fehlerart möglich.

So ist die Fehlerquelle ist durch genaues Auswerten der Spannung am Knotenpunkt VZ1 und durch das sequentielle Kombinieren der Schalterzustände der Schalter T5, T21, T31 eingrenzbar. Ist beispielsweise der Deaktivierschalter T21 und der Schalter T31 durchgeschaltet und wird durch Auswerten der Spannung an VZ1 auf einen zumindest teilweise durchgeschalteten Sicherheitsschalter T01 geschlossen, so gibt dies einen Hinweis darauf, dass der Sicherheitsschalter T01 einen Kurzschluss hat. Entsprechend können so nacheinander alle Schalterkombinationen durchgespielt werden. Dies kann in einer weiteren Ausführungsform nicht direkt im Airbag-Steuergerät geschehen, sondern durch ein Diagnosesystem, das in Werkstätten zur Verfügung steht.

In einer weiteren Ausführungsform können die Energiespeicher C01 bis C0n zu einem gemeinsamen Energiespeicher zusammengefasst werden. Ebenfalls ist es denkbar, für die Kondensatoren C11 bis C1n einen gemeinsamen Kondensator vorzusehen.

## Patentansprüche

1. Anordnung zum Ansteuern eines Insassenschutzsystems mit mindestens zwei Zündpfaden (ZP1 ... ZPn), die jeweils mindestens einen Zündschalter (THL1 ... THS1), mindestens ein Zündelement (ZE1) und einen elektronischen Sicherheitsschalter (T01) aufweisen, der über eine Steuerschaltung ansteuerbar ist,
**dadurch gekennzeichnet,**
**dass** alle Sicherheitsschalter (T01, T02 ... T0n) über eine gemeinsame Leitung von der Steuerschaltung (S) angesteuert werden und Zündpfade über einen jeweiligen Deaktivierungsschalter (T21, T22, ...T2N) einzeln abschaltbar sind.

2. Anordnung nach Anspruch 1, **dadurch gekennzeichnet, dass** die Steuerschaltung eine Stromspiegelanordnung aufweist mit einem Quellentransistor (T10), durch den ein Quellenstrom in Durchflussrichtung fließt, der über einen Schalter (T5) einschaltbar ist und über eine Teilerschaltung (R53, R54) mindestens auf einen ersten und einen zweiten Stromwert einstellbar ist, mit einem Spiegeltransistor für jeden Zündpfad, durch die jeweils ein vom Quellenstrom abhängiger Spiegelstrom in Durchflussrichtung fließt, wobei das Potential am Steuereingang (G10) eines jeweiligen Sicherheitsschalters (T01, T02 ... T0n) vom Spiegelstrom abhängt, wobei ein Sicherheitsscahlter (T01, T02 ... T0n) bei dem ersten Stromwert soweit durchsteuert, dass der Strom in einem Zündpfad (ZP1 ... ZPn) ausreicht, um das jeweilige Zündelement (ZE1 ...) zu zünden und bei dem zweiten Stromwert nur soweit durchsteuert, dass der Strom in einem Zündpfad (ZP1 ... ZPn) nicht ausreicht, um das jeweilige Ztindelement (ZE1 ...) zu zünden.

3. Anordnung nach Anspruch 1 oder 2, **dadurch gekennzeichnet, dass** einer Serienschaltung aus einem Zündelement (ZE1 ...) und mindestens einem Zündschalter (THL1, THS1 ... THLn) jeweils Testschalter (T31, T32 ... T3n) parallelgeschaltet sind, um im Testfall einen Stromfluss durch eine solche Serienschaltung zu vermeiden.

4. Anordnung nach einem der vorherigen Ansprüche, **dadurch gekennzeichnet, dass** ein Sicherheitsschalter (T01, T02 ... T0n) mit einem n-Kanal-MOSFET gebildet ist.

5. Anordnung nach Anspruch 4, **dadurch gekennzeichnet, dass** der Schaltstrecke eines n-Kanal-MOSFETs ein Widerstand (R61, R62 ... R6n) parallelgeschaltet ist.

6. Anordnung nach einem der vorherigen Ansprüche, **dadurch gekennzeichnet, dass** die Steuerschaltung (S) derart ausgebildet ist, dass bei Erkennen eines Aufpralls der/die Zündschalter und/oder der/die Sicherheitsschalter durchschalten, wenn ein die Steuerschaltung (S) ansteuernder, mechanischer Beschleunigungsschalter für eine vorgebbare Mindestzeit schließt.

7. Anordnung nach-einem der vorherigen Ansprüche, **dadurch gekennzeichnet, dass** mindestens zwei Zündpfade von einem gemeinsamen Energiespeicher gespeist werden.

8. Anordnung nach einem der Ansprüche 1 bis 6, **dadurch gekennzeichnet, dass** jeder Zündpfad von einem gesonderten Energiespeicher gespeist wird.

9. Anordnung nach einem der vorherigen Ansprüche, **dadurch gekennzeichnet, dass** mindestens zwei Spiegeltransistoren von einem gemeinsamen Energiespeicher gespeist werden.

10. Anordnung nach einem der Ansprüche 1 bis 8, **dadurch gekannzeichnet,** dass jeder Spiegeltransistor von einem gesonderten Energiespeicher gespeist wird.

11. Verfahren zum Testen des Sicherheitsschalters in einem Zündpfad eines Insassenschutzsystems gemäß einem der Ansprüche 1 bis 10,
**dadurch gekennzeichnet, dass**
- im stromspiegel ein Quellenstrom derart eingestellt wird, dass der dabei resultierende Spiegelstrom nur zum teilweisen Durchschalten des Sicherheitsschalters führt,
- der Strompfad parallel zur Serienschaltung aus mindestens einem Zündschalter und einem Zündelement durchgeschaltet wird, und
- aus dem ermittelten Potential an dieser Serienschaltung auf den Funktionszustand des Sicherheitsschalters geschlossen wird.

## Claims

1. Arrangement for control of a vehicle occupant protection system, having at least two firing paths (ZP1 ... ZPn), which each have at least one firing switch (THL1 ... THS1), at least one firing element (ZE1) and an electronic safety switch (T01) which can be controlled by way of a control circuit,
**characterised in that**
all safety switches (T01, T02 ... T0n) can be controlled by the control circuit (S) by way of a common line and that firing paths can be deactivated individually by way of a respective deactivation switch (T21, T22 ... T2n).

2. Arrangement according to Claim 1, **characterised in that** the control circuit has a current mirroring arrangement with a source transistor (T10), through which a source current flows in the flow direction, which can be turned on by way of a switch (T5) and can be set by way of a divider circuit (R53, R54) at least to a first and a second current value, with a mirror transistor for each firing path, through which in each case a mirror current which is dependent on the source current flows in the flow direction, whereby the potential at the control input (G10) of a respective safety switch (T01, T02 ... T0n) depends on the mirror current, whereby in the case of the first current value a safety switch (T01, T02 ... T0n) is force tripped to the extent that the current in a firing path (ZP1 ... ZPn) is sufficient to fire the respective firing element (ZE1 ...) and in the case of the second current value it is force tripped only to the extent that the current in a firing path (ZP1 ... ZPn) is not sufficient to fire the respective firing element (ZE1 ...).

3. Arrangement according to Claim 1 or 2, **characterised in that** test switches (T31, T32 ... T3n) are connected in parallel in each case to a series circuit consisting of a firing element (ZE1 ...) and at least one firing switch (THL1, THS1 ... THLn) in order to avoid a current flow through such a series circuit in the test situation.

4. Arrangement according to one of the preceding claims, **characterised in that** a safety switch (T01, T02 ... T0n) is formed using an n-channel MOSFET.

5. Arrangement according to Claim 4, **characterised in that** a resistor (R61, R62 ... R6n) is connected in parallel with the contact break distance of an n-channel MOSFET.

6. Arrangement according to one of the preceding claims, **characterised in that** the control circuit (S) is designed in such a way that when an impact is detected the firing switch(es) and/or the safety switch(es) through-connect if a mechanical acceleration switch controlling the control circuit (S) closes for a predefinable minimum time.

7. Arrangement according to one of the preceding claims, **characterised in that** at least two firing paths are fed by a common energy store.

8. Arrangement according to one of Claims 1 to 6, **characterised in that** each firing path is fed by a separate energy store.

9. Arrangement according to one of the preceding claims, **characterised in that** at least two mirror transistors are fed by a common energy store.

10. Arrangement according to one of Claims 1 to 8, **characterised in that** each mirror transistor is fed by a separate energy store.

11. Method for testing the safety switch in a firing path of a vehicle occupant protection system according to one of Claims 1 to 10, **characterised in that**:
- in the current mirror a source current is set in such a way that the mirror current resulting in this situation only results in partial through-connection of the safety switch,
- the current path is through-connected in parallel to the series circuit consisting of at least one firing switch and one firing element, and
- the functional state of the safety switch is inferred from the potential determined on this series circuit.

## Revendications

1. Installation pour la commande d'un système de protection des occupants, comprenant au moins deux chemins d'amorçage (ZP1 ... ZPn) qui comportent chacun au moins un interrupteur d'amorçage (THL1 ... THS1), au moins un élément d'amorce (ZE1), et un interrupteur de sécurité électronique (T01) pouvant être excité par un circuit de commande,
**caractérisée en ce que** tous les interrupteurs de sécurité (T01, T02 ... T0n) sont excités par le circuit de commande (S) via une ligne commune, et des chemins d'amorçage peuvent être débranchés individuellement par un interrupteur de désactivation respectif (T21, T22, T2n).

2. Installation selon la revendication 1, **caractérisée en ce que** le circuit de commande comprend un dispositif de courant image comportant un transistor de source (T10) parcouru par un courant de source dans le sens de conduction qui peut être enclenché par un interrupteur (T5) et ajusté à au moins une première et une deuxième valeur de courant à l'aide d'un circuit diviseur (R53, R54); un transistor image pour chacun des chemins d'amorçage, parcourus chacun dans le sens de conduction par un courant image qui dépend du courant de source, le potentiel à l'entrée de commande (G10) de chaque interrupteur de sécurité (T01, T02 ... T0n) dépendant du courant image, un interrupteur de sécurité (T01, T02 ... T0n) devenant conducteur sur la première valeur de courant jusqu'à un tel niveau que le courant dans un chemin d'amorçage (ZP1 ... ZPn) est suffisant pour amorcer l'élément d'amorce correspondant (ZE1 ... ), et devenant conducteur sur la deuxième valeur de courant jusqu'à un tel niveau que le courant dans un chemin d'amorçage (ZP1 ... ZPn) n'est pas suffisant pour amorcer l'élément d'amorce correspondant (ZE1 ...).

3. Installation selon la revendication 1 ou 2, **caractérisée en ce qu'**un interrupteur de test (T31, T32 ... T3n) est connecté en parallèle à chacun d'un circuit en série composé d'un élément d'amorce (ZE1 ...) et au moins un interrupteur d'amorçage (THL1, THS1 ... THLn) afin d'éviter, lors d'un essai, un flux de courant à travers un tel circuit en série.

4. Installation selon l'une des revendications précédentes, **caractérisée en ce qu'**un interrupteur de sécurité (T01, T02 ... T0n) est réalisé par un transistor MOSFET à canal N.

5. Installation selon la revendication 4, **caractérisée en ce qu'**une résistance (R61, R62 ... R6n) est connectée en parallèle à la piste de commutation d'un MOSFET à canal N.

6. Installation selon l'une des revendications précédentes, **caractérisée en ce que** le circuit de commande (S) est réalisé de telle façon que le ou les interrupteurs d'amorçage et/ou le ou les interrupteurs de sécurité deviennent conducteurs suite à la reconnaissance d'un impact lorsqu'un interrupteur d'accélération mécanique qui excite le circuit de commande (S) ferme pendant un temps minimum pouvant être prédéterminé.

7. Installation selon l'une des revendications précédentes, **caractérisée en ce qu'**au moins deux chemins d'amorçage sont alimentés par un accumulateur d'énergie commun.

8. Installation selon l'une des revendications 1 à 6, **caractérisée en ce que** chaque chemin d'amorçage est alimenté par un accumulateur d'énergie séparé.

9. Installation selon l'une des revendications précédentes, **caractérisée en ce qu'**au moins deux transistors images sont alimentés par un accumulateur d'énergie commun.

10. Installation selon l'une des revendications 1 à 8, **caractérisée en ce que** chaque transistor image est alimenté par un accumulateur d'énergie séparé.

11. Procédé pour tester l'interrupteur de sécurité situé dans un chemin d'amorçage d'un système de protection des occupants selon l'une des revendications 1 à 10,
**caractérisé en ce que** :
- un courant de source est ajusté dans l'image de courant de telle manière que le courant image résultant ne rend l'interrupteur de sécurité que partiellement conducteur,
- le chemin de courant connecté en parallèle du circuit en série formé d'au moins un interrupteur d'amorçage et d'un élément d'amorce, est rendu conducteur, et
- l'état de fonctionnement de l'interrupteur de sécurité est déduit du potentiel déterminé sur ce circuit en série.
